# EUROPEAN PATENT APPLICATION

(11) **EP 1 923 192 A1**
(43) Date of publication of application: **21.05.2008**
(21) Application number: 06781470.7
(22) Date of filing: 24.07.2006
(51) Int. Cl.: B29C 43/20, B29B 11/14, D04H 1/42, D04H 1/45, D04H 3/16, B29K 101/12, B29K 105/08, B29L 9/00

(54) **METHOD FOR MOLDING FIBER-REINFORCED THERMOPLASTIC COMPOSITE MATERIAL, INTERMEDIATE THEREOF AND COMPOSITE SHEET**

(30) Priority: 29.07.2005 JP 2005221233
(71) Applicant: The Doshisha, Kyoto-shi, Kyoto 6028580 (JP); Marubeni Intex Co., Ltd., Chuo-ku Osaka City, Osaka 541-0053 (JP)
(72) Inventor: KATAYAMA, Tsutao, c/o DOSHISHA UNIVERSITY, Kyotanabe-city Kyoto 610-0321 (JP); TANAKA, Kazuto, c/o DOSHISHA UNIVERSITY, Kyotanabe-city, Kyoto 610-0321 (JP); UNO, Kazutaka, c/o MARUBENI INTEX, Osaka City, Osaka 541-0053 (JP)
(74) Representative: Grünecker, Kinkeldey, Stockmair & Schwanhäusser Anwaltssozietät
(86) International application number: PCT/JP2006/314548
(87) International publication number: WO 2007/013385

(57) **Abstract**

Provided is a method for molding a fiber-reinforced thermoplastic composite material with good workability. The method enables to stably obtain articles having good quality at low cost. The method for molding a fiber-reinforced thermoplastic composite material of the present invention includes placing, in molds (2, 3), a composite sheet (7) integrated by laminating and stitching together a reinforcing fiber (5) and a nonwoven fabric (6) composed of a thermoplastic resin and then molding by pressing and heating such that the temperature of the composite sheet (7) becomes higher than the melting point of the thermoplastic resin.

## Description

### Technical Field

The present invention relates to a method for molding a fiber-reinforced thermoplastic composite material. In particular, the present invention provides a method for molding a fiber-reinforced thermoplastic composite material suitable for the mass production of, for example, personal computer chassis or the outer panels of automobiles, an intermediate for molding the fiber-reinforced thermoplastic composite material, and, furthermore, a composite sheet suitable for the molding method.

### Background Art

A fiber-reinforced thermoplastic composite material is expected to be a useful material in applications such as personal computer chassis and the outer panels of automobiles in the future because the material is lighter than a metal such as iron or aluminum, and has a desirable strength.

The fiber-reinforced thermoplastic composite material has been attracting attention as a material suitable for mass production of molded articles, because the material can be molded in an extremely short cycle as compared to a thermosetting composite material. The most general methods for molding fiber-reinforced thermoplastic composite materials include injection molding involving the use of the so-called thermoplastic resin composition having low mechanical characteristics, and a compression molding method referred to as stamping molding.

Stamping molding involves: heating a fiber-reinforced thermoplastic composite material outside a mold, such that the temperature of the material becomes equal to or higher than the melting point of a thermoplastic resin, to melt the material; charging the molten product into a mold having a temperature lower than the melting point of the thermoplastic resin; and subjecting the resultant to compression molding with a pressing machine. A cycle for molding the material can be shortened in stamping molding because the material is cooled to solidify during the compression molding. An IR heater is known to be the most efficient heating means to be used in stamping molding.

In addition, JP-A-2004-276471 discloses, as a method for molding a thermoplastic composite material into a large molded article, a method involving depositing or laminating a fiber-reinforced thermoplastic composite material in a male or female open mold, covering the entirety of the open mold with a heat-resistant bag material, thereafter, discharging air between the bag material and the open mold to bring the fiber-reinforced thermoplastic composite material into close contact with the open mold with the bag material, and heating the material in such state such that the temperature of the material becomes higher than the melting point of a thermoplastic resin to mold the material.
Patent Document 1: JP 2004-276471 A

### Disclosure of the Invention

### Problem to be solved by the Invention

Article obtained by subjecting metal material such as iron or aluminum to press molding has been applied as parts such as the outer panel of an automobile. Metal material is subjected to press molding by being placed in a mold, whereby products having stable performance are provided within a short time period.

In contrast to the foregoing, in the above-mentioned stamping molding, the directions of reinforcing fibers vary owing to the flow of the materials at the time of molding, and therefore the directions of the reinforcing fibers in a molded article become nonuniform, and it is difficult to provide products having stable performance. In addition, since the material is molded by being allowed to flow in a mold having a temperature lower than the melting point of the thermoplastic resin, it is difficult to mold article having small thickness as the flow of the material and the solidification of the material tends negate one another. Further, since the material is allowed to flow during compression molding with a pressing machine, a high pressure, albeit lower than that needed for injection molding, is needed. Accordingly, a huge pressing machine is required for molding large molded article.

In addition, in stamping molding, the fiber-reinforced thermoplastic composite material must be heated to a temperature higher than the melting point of the thermoplastic resin outside a mold in order to shortened the molding cycle. However, if air is being included in the fiber-reinforced thermoplastic composite material, heat cannot be properly propagated through the thermoplastic resin due to the heat insulating effect of the air. Accordingly, in the stamping molding, the fiber-reinforced thermoplastic composite material must be processed in advance into a single sheet- or plate-like shape free of any air layer by heating, melting, cooling, and solidifying in a preceding step. The need for such step of processing the material into a sheet- or plate-like shape results in an increase in material cost.

In the method disclosed in JP-A-2004-276471, since molding is performed with open mold, the method has an advantage such that molding apparatus can be obtained with a relatively small investment. However, heat is apt to escape during the heating of the thermoplastic composite material, and thus molding time is prolonged. Accordingly, the method is suitable for application in fields where production is a small, such as a water bike, a fishing boat, a recreational device, or a monument, but not in fields where mass production is required, such as a personal computer chassis or the outer panel of an automobile.

### Means for solving the Problems

The present invention provides a method for molding a fiber-reinforced thermoplastic composite material having excellent quality and productivity. That is, the method of molding a fiber-reinforced thermoplastic composite material according to the present invention includes placing, in a mold, a composite sheet integrated by laminating and stitching together a reinforcing fiber and a nonwoven fabric composed of a thermoplastic resin; and
molding the composite sheet by pressing and heating the composite sheet such that a temperature of the composite sheet becomes higher than a melting point of the thermoplastic resin.

Further, a composite sheet according to the present invention is a composite sheet integrated by laminating and stitching together a reinforcing fiber and a nonwoven fabric composed of a thermoplastic resin. The composite sheet may be integrated by laminating reinforcing fibers such that the reinforcing fibers are arranged in a predetermined direction in each layer and the direction of the reinforcing fibers are different from layer to layer, and laminating and stitching a nonwoven fabric composed of a thermoplastic resin with the reinforcing fibers.

In addition, an intermediate for molding a fiber-reinforced thermoplastic composite material according to the present invention is obtained by cutting and/or laminating the composite sheet to form a predetermined shape to be placed in a mold. In this case, the intermediate may be obtained by cutting and laminating the composite sheets to form a predetermined shape to be placed in a mold, and stitching the composite sheets together.

### Effects of the Invention

According to the method for molding a fiber-reinforced thermoplastic composite material of the present invention, since the reinforcing fibers and the nonwoven fabric composed of the thermoplastic resin are laminated and stitched together, the direction of each of the reinforcing fibers of an intermediate can be maintained at the time of the molding, and products having a stable performance can be obtained as compared to stamping molding. In addition, the material can be molded with heat in a relatively short time period because the thermoplastic resin is composed of nonwoven fabric, and readily melts when heated. In addition, the method has better workability than that of the stamping molding because there is no need to heat the intermediate before placing it in the molds. In addition, the intermediate can be produced at a reduced cost because a series of molding processes such as heating, molding, and cooling of the fiber-reinforced thermoplastic composite material are not required.

In addition, the composite sheet according to the present invention can be molded with heat in a relatively short time period because the thermoplastic resin is composed of nonwoven fabric, and readily melts when heated. In addition, since stitching is being performed, when the sheet is employed in the above-mentioned method for molding a fiber-reinforced thermoplastic composite material according to the present invention, the reinforcing fibers and the nonwoven fabric do not come apart when being placed in the molds, and placement is easy. Further, since the intermediate is integrated by laminating reinforcing fibers such that the reinforcing fibers are arranged in a predetermined direction in each layer and the direction of the reinforcing fibers are different from layer to layer, and laminating and stitching a nonwoven fabric composed of a thermoplastic resin with the reinforcing fibers, the orientation of the reinforcing fibers is adjusted and can be maintained during molding. As a result, when being employed in the above-mentioned method for molding a fiber-reinforced thermoplastic composite material according to the present invention, the quality of the final molded articles will be more uniform.

In addition, since the intermediate according to the present invention is obtained by cutting and/or laminating the composite sheet to form a predetermined shape to be placed in a mold, the operation of placing the composite sheet in the molds becomes easy. In addition, since the intermediate is obtained by cutting and laminating the composite sheets to form a predetermined shape to be placed in a mold, and stitching the composite sheets together, the workability of placing the intermediate in the mold is further improved. In addition, the quality of the final molded article can be improved because the amount of air in the intermediate placed in the molds can be reduced.

### Brief Description of the Drawings

Fig. 1 is a view showing a method for molding a fiber-reinforced thermoplastic composite material according to one embodiment of the present invention.
Fig. 2 is a view showing a laminated structure of a composite sheet.
Fig. 3 is a view showing a composite sheet production apparatus.
Fig. 4 is a view showing an intermediate and a molding method according to another embodiment of the present invention.

### Description of Reference Numerals

- 1: intermediate
- 2, 3: mold
- 4: cavity space
- 5: reinforcing fiber
- 6: nonwoven fabric
- 7: composite sheet
- 10: composite sheet production apparatus
- 11: conveying belt
- 12: controlling unit
- 13a-13c: reinforcing fiber holding unit
- 14a-14d: reinforcing fiber feeding unit
- 15a-15c: reinforcing fiber tensioning unit
- 16a-16c: holding unit
- 17a-17c: holding unit guide
- 18: nonwoven fabric feeding unit
- 19: stitching unit
- 20: winding unit
- 21: conveying roller
- 23: pin (temporal tacking portion)

### Best Mode for carrying out the Invention

Hereinafter, a method for molding a fiber-reinforced thermoplastic composite material according to one embodiment of the present invention will be described with reference to figures.

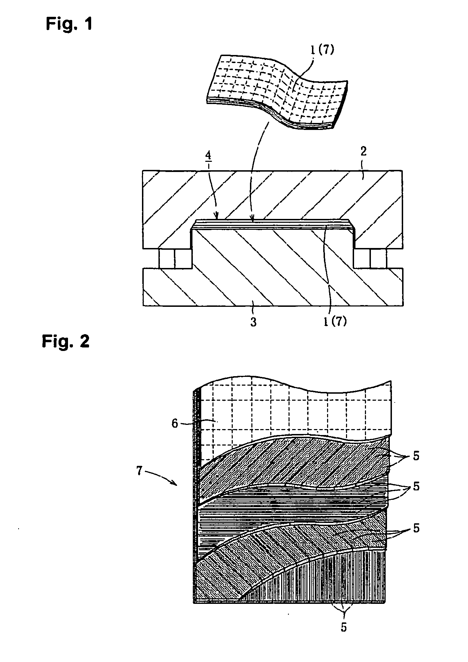

As shown in Fig. 1, the method for molding a fiber-reinforced thermoplastic composite material according to one embodiment of the present invention includes the steps of: placing, in molds 2 and 3, a composite sheet 7 integrated by laminating reinforcing fibers and a nonwoven fabric formed of a thermoplastic resin and by stitching the reinforcing fibers and the nonwoven fabric together; and molding the composite sheet 7 , which is being placed in the molds 2, 3, by pressing the composite sheet 7 and by heating the composite sheet 7 such that the temperature of the composite sheet 7 becomes higher than the melting point of the thermoplastic resin. It should be noted that, in the example shown in Fig. 1, an intermediate 1 is produced by cutting and/or laminating the composite sheets 7 to form a predetermined shape to be placed in the molds 2 and 3, and the intermediate 1 is placed in the molds 2 and 3.

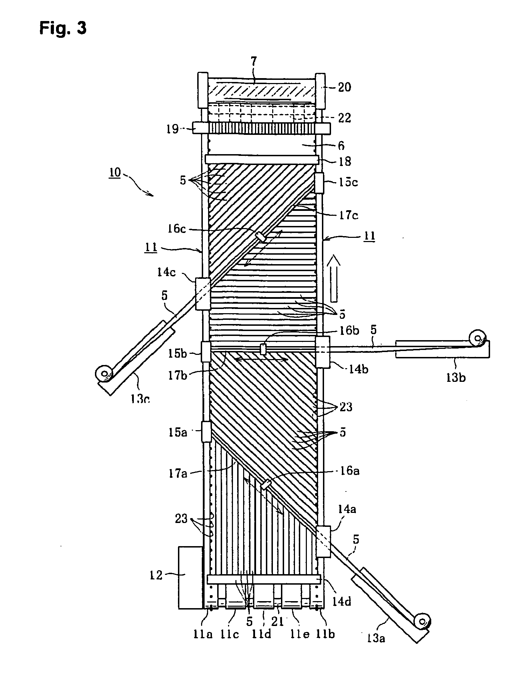

As shown in Fig. 2, the composite sheet 7 maybe a composite sheet 7 integrated by laminating reinforcing fibers 5 such that the reinforcing fibers 5 are arranged in a predetermined direction in each layer and the direction of the reinforcing fibers 5 are different from layer to layer, and laminating and stitching a nonwoven fabric 6 composed of a thermoplastic resin with the reinforcing fibers 5. The composite sheet 7 can be produced by using, for example, a composite sheet production apparatus 10 shown in Fig. 3.

As shown in Fig. 3, the composite sheet production apparatus 10 includes: a conveying belt 11; a controlling unit 12; reinforcing fiber holding units 13a to 13c; reinforcing fiber feeding units 14a to 14d; reinforcing fiber tensioning units 15a to 15c; holding units 16a to 16c; holding unit guides 17a to 17c; a nonwoven fabric feeding unit 18; a stitching unit 19; and a winding unit 20.

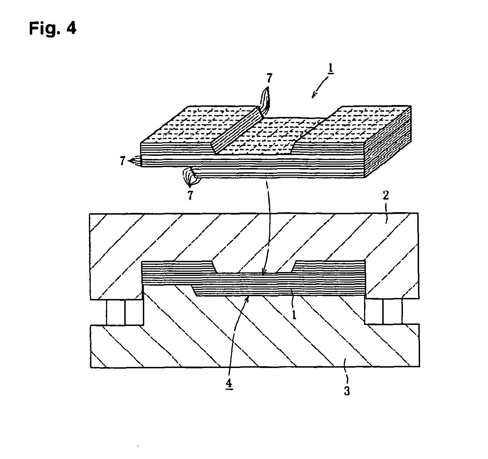

The conveying belt 11 conveys the reinforcing fibers and the nonwoven fabric laminated in sheet shape, is hooked onto and revolved by conveying rollers 21 and 22, and includes temporal tacking portions 23 at both sides of its width direction for temporarily tacking the reinforcing fibers 5. In this embodiment, the conveying belt 11 includes belts 11a and 11b at both sides on which the pins 23 serving as the temporal tacking portions for temporarily tacking the reinforcing fibers 5 are provided at predetermine intervals, and a plurality of intermediate belts 11c to 11e (three belts in the example shown in Fig. 4) for supporting the intermediate portion, respectively hooked onto and revolved by the conveying rollers 21 and 22. It should be noted that the temporal tacking portions 23 for temporarily tacking the reinforcing fibers 5 are not limited to the pins 23 as long as they possess the function of temporarily tacking the reinforcing fibers 5. The controlling unit 12 controls the revolving action of each of the conveying rollers 21 and 22, and the conveying belt 11.

The reinforcing fiber holding units 13a to 13c hold the reinforcing fibers 5 (continuous reinforcing fibers) wound up in winding cores, and the reinforcing fiber feeding units 14a to 14c feed the reinforcing fibers 5 from the reinforcing fiber holding units 13a to 13c onto the conveying belt 11. In this embodiment, the reinforcing fiber feeding units 14a to 14c each includes a feeding mechanism (not shown) for appropriately feeding the reinforcing fibers 5 and a cutter (not shown) for cutting the reinforcing fibers 5. The reinforcing fiber tensioning units 15a to 15c are arranged in the width direction of the conveying belt 11 at predetermined angles facing the reinforcing fiber feeding units 14a to 14c.

The holding units 16a to 16c are members for holding the ends of the reinforcing fibers 5 from the reinforcing fiber feeding units 14a to 14c. The holding unit guides 17a/17b/17c guide the movement of the holding units 16a/16b/16c between the reinforcing fiber feeding units 14a/14b/14c and the reinforcing fiber tensioning units 15a/15b/15c.

The nonwoven fabric feeding unit 18 feeds the nonwoven fabric onto the conveying belt 11. The stitching unit 19 secures the laminated reinforcing fibers 5 by stitching the fibers with thread, and the winding unit 20 winds up the stitched composite sheet 7.

The composite sheet production apparatus 10 holds the ends of the reinforcing fibers 5 with the holding units 16a to 16c, and draws the reinforcing fibers 5 from the reinforcing fiber feeding units 14a to 14c in the width direction of the conveying belt 11 along the holding unit guides 17a to 17c. Then, the reinforcing fibers 5 are depressed at the reinforcing fiber feeding units 14a to 14c and the reinforcing fiber tensioning units 15a to 15c, and are temporarily tacked to the pins 23 of the conveying belt 11. The reinforcing fiber feeding units 14a to 14c cut the ends of the temporarily tacked reinforcing fibers 5 with the cutters (not shown) . Thus, the reinforcing fibers 5 can eachbe tensioned at a predetermined angle on the conveying belt 11. It should be noted that this embodiment is set as follows: the reinforcing fibers 5 are tensioned from the reinforcing fiber feeding unit 14a at - 45° with respect to the moving direction of the conveying belt 11, the reinforcing fibers 5 are tensioned from the reinforcing fiber feeding unit 14b at 90° with respect to the moving direction of the conveying belt 11, and the reinforcing fibers 5 are tensioned from the reinforcing fiber feeding unit 14c at 45° with respect to the moving direction of the conveying belt 11.

The series of operations by the holding units 16a to 16c, the reinforcing fiber feeding units 14a to 14c, and the reinforcing fiber tensioning units 15a to 15c are repeated according to the speed at which the conveying belt 11 moves to arrange the reinforcing fibers 5 in the moving direction of the conveying belt 11.

In addition, in this embodiment, the reinforcing fiber feeding unit 14d is also provided in front of the traveling direction of the conveying belt 11. Although not shown, the reinforcing fiber feeding unit 14d is supplied with a plurality of reinforcing fibers 5 from above the conveying belt 11, and each reinforcing fiber 5 is sequentially arranged in sheet shape in the width direction of the conveying belt 11 along the moving direction of the conveying belt 11. For example, a plurality of reinforcing fibers arranged according to the width direction of the conveying belt 11 may be aligned and wound around a beam, and the reinforcing fibers being fed from the beam. Alternatively, a plurality of bobbins wound with reinforcing fibers similar to 14a to 14c may be arranged, and reinforcing fibers being aligned and fed from each bobbin in the width direction of the conveying belt 11. Alternatively, a tire fabric obtained by weaving reinforcing fibers as warp in a tire fashion may be supplied.

According to the composite sheet production apparatus 10, the reinforcing fibers 5 are sequentially fed at angles of, for example, 0°, - 45°, 90°, and 45°with respect to the moving direction of the conveying belt 11, and are respectively arranged in a predetermine direction and laminated on the conveying belt 11. It should be noted that the angles at which the reinforcing fiber feeding units 14a to 14c, the reinforcing fiber tensioning units 15a to 15c, the holding units 16a to 16c, and the holding unit guides 17a to 17c are provided can be freely changed with respect to the moving direction of the conveying belt 11. The angle at which the reinforcing fibers 5 in each layer are tensioned can be freely set by changing the angle at which each of the reinforcing fibers 5 is fed from each of the reinforcing fiber feeding units 14a to 14c. In addition, a mechanism for tensioning a reinforcing fiber including, for example, the reinforcing fiber feeding unit can be added to the conveying belt 11. As a result, the angles at which the reinforcing fibers 5 are laminated, and the order of the laminating angles can be arbitrarily set without being limited to the example shown in Fig. 2.

The nonwoven fabric feeding unit 18 supplies the nonwoven fabric 6 composed of a thermoplastic resin onto the product obtained by laminating the reinforcing fibers 5. A nonwoven fabric produced by, for example, a meltblown method may be used as the nonwoven fabric 6. A nonwoven fabric used in this embodiment was obtained by blowing an air flow having a high temperature and a high pressure out of the outlet of a spinning nozzle to stretch and open the molten spun yarns of a thermoplastic resin, integrating the resultant on a collection net conveyer, and turning the integrated product into a sheet. The stitching unit 19 secures the reinforcing fibers 5 and the nonwoven fabric 6 laminated as described above by stitching them with a thread to form the composite sheet 7, and the winding unit 20 winds the composite sheet 7 in accordance with the speed of the conveyingbelt 11. In the composite sheet production apparatus 10, during the process in which the composite sheet 7 is wound up by the winding unit 20, the conveying belt 11 revolves downward such that the composite sheet 7 is released from the temporal tacking portions 23 of the conveying belt 11 and being wound up by the winding unit 20. As described above, the production of the composite sheet 7 from the reinforcing fibers 5 can be automated with a machine.

As shown in Fig. 4, in the composite sheet 7 produced in this embodiment, the reinforcing fibers 5 are laminated such that the direction is staggered by 45° at each layer.

Next, during the production of the intermediate 1, the composite sheets 7 may be cut and laminated to form a predetermined shape to be placed in the molds 2 and 3. It should be noted that, when laminating the composite sheets 7, the isotropy of the intermediate 1 can be improved by slightly rotating the composite sheets 7 at each layer before laminating them. The intermediate 1 can be placed in a cavity space 4 between the molds 2 and 3 as it is because the intermediate is formed into the predetermined shape to be placed in the molds 2 and 3. Then, the molds 2 and 3 are closed, and the intermediate is molded by heating such that the temperature in the molds 2 and 3 becomes higher than the melting point of the thermoplastic resin of the nonwoven fabric 6. Thereafter, the intermediate is cooled to a temperature lower than the melting point and a desired molded article can be molded.

The molding method can be performed at a reduced cost because a series of molding processes such as heating, melting, molding, cooling, and solidification are not required for the production of the intermediate 1 and the composite sheet 7 to be placed in the molds 2 and 3, and no facility such as a mold is required for the production of the intermediate 1. In addition, the operation of placing the composite sheet 7 or the intermediate 1 in the molds 2 and 3 does not require the heating of the composite sheet 7 or the intermediate 1, and therefore the operation is easy and not complicated as in the case of the press molding of a metal product. In addition, the orientation of a reinforcing fiber can be controlled and fixed during the production of the intermediate 1, and therefore no flowing of the reinforcing fibers included in a molded article occurs, and products having uniform performance can be stably provided.

In addition, the composite sheet 7 or the intermediate 1 is obtained by laminating the reinforcing fibers 5 and the nonwoven fabric 6 composed of a thermoplastic resin, and the nonwoven fabric 6 can be easily melted by heating, so each of the reinforcing fibers 5 can be promptly impregnated with the thermoplastic resin. As a result, the molding pressure and molding time can be reduced. In particular, since a nonwoven fabric produced by the meltblown method is employed in this embodiment, the above effects can be readily achieved. Further, since the intermediate is formed into a predetermined shape to be placed in the molds 2 and 3, the resin generally does not flow about at the time of the molding, and the intermediate can be melted and molded as it is. As a result, the direction of a reinforcing fiber in the product stage can be controlled so as to be substantially identical to that in an intermediate state, and a product with better quality can be stably provided. It should be noted that electromagnetic induction type heating means may be used as a heating means for the molds and a means for promptly increasing the temperature of the molds. For example, a molding apparatus manufactured by Roctool in France may be utilized. The molding apparatus can rapidly heat the intermediate 1, and the molding cycle can be reduced.

The method for molding a fiber-reinforced thermoplastic composite material, the intermediate, and the composite sheet according to one embodiment of the present invention have been described above. However, none of the method for molding a fiber-reinforced thermoplastic composite material, the intermediate, and the composite sheet according to the present invention is limited to the above embodiment, and various modifications can be made.

For example,inthe compositesheet production apparatus 10, the angle at which the reinforcing fibers 5 are fed from each of the reinforcing fiber feeding units 14a to 14c may be changed freely with respect to the moving direction of the conveying belt 11. Accordingly, the orientation of the reinforcing fibers 5 can be set freely. In the step of forming the intermediate 1, although the composite sheets 7 composed of the reinforcing fibers 5 are laminated, an intermediate having various orientations can be produced by laminating the composite sheets while rotating and staggering the sheets with respect to the direction in which the sheets are laminated. As a result, the homogeneity and isotropy of the molded article can be improved.

In addition,examplesofthethermoplastic resininclude, but not particularly limited to, polyolefin-based resins such as polyethylene and polypropylene, polyamide-based resins such as nylon 6, nylon 66, nylon 12, and nylon 46, polyester-based resins such as polyethylene terephthalate and polybutylene terephthalate, polyether ketone resins, polyphenylene sulfide resins, polyether imide resins, and polycarbonate resins.

Apolyester-based resin is preferable in the field where heat resistance is particularly demanded. In addition, an additive such as a hydrolysis inhibitor or a heat degradation inhibitor can be added depending on the purpose. In addition, a polyolefin-based resin is preferable in the field where a reduction in cost, water resistance, and chemical resistance are demanded, and, furthermore, polypropylene is desirable because polypropylene has excellent solvent resistance and can be molded under a wide variety of conditions. It has been pointed out that owing to its intrinsic characteristics, polypropylene has a drawback of having poor adhesiveness with a reinforcing fiber, but the adhesiveness has been improved by denaturation of polypropylene with an acid in recent years. Accordingly, it is preferable that polypropylene is subjected to such denaturation before being used in the fiber-reinforced thermoplastic composite material of the present invention. In addition, a polyamide-based resin is preferable when abrasion resistance and oil resistance are required. Nylon 6 is desirable in the field where hygroscopicity is of no concern. In this case, an oxidation degradation inhibitor or the like can be added depending on the purpose in order to prevent oxidation degradation due to heating in, for example, an oxygen atmosphere.

The meltblown method has been descried as an exemplary method for producing the nonwoven fabric formed of a thermoplastic resin, but a method of producing the nonwoven fabric is not limited to the meltblown method. Apart from the meltblown method, a dry needlepunching method or a spun bond method can also be adopted. It is desirable that a nonwoven fabric formed of a thermoplastic resin in the present invention has a thin fiber, is to a possible extent free of impurities, and is produced by the meltblown method or the spun bond method. A usable nonwoven fabric produced by the spun bond method is, for example, a filament nonwoven fabric obtained by subjecting a thermoplastic resin to melt spinning, drafting spun yarns with a draft gear to thin the yarns, opening the thinned yarns with electrostatic repulsion generated by triboelectric charging or corona discharge, depositing the opened yarns on a conveyer net to form filament webs, and subjecting the filament webs to thermocompression bonding in a thermocompression bonding apparatus including, for example, a pair of embossing rolls.

Examples of the reinforcing fibers used in the present invention include inorganic fibers such as glass fibers and carbon fibers, and organic fibers such as aramid fibers and PBO fibers. Among the above, the glass fibers are preferable because the fibers are excellent in strength, elasticity, and flexing resistance, a surface treatment agent for the fibers can be easily optimized, and each of the fibers has good adhesiveness with the resin and is inexpensive. The glass fibers are classified into, for example, an E glass (for electrical applications), a C glass (for an application where corrosion resistance is needed), an S glass, and a T glass (having a high strength and a high elasticity), and the fibers can be appropriately selected depending on intended purposes. Further, the carbon fibers can be suitably used in the field where a high strength and a high elasticity are required.

Regardless of the types of reinforcing fiber used, the surface of a reinforcing fiber bundle is desirably treated with a coupling agent or a sizing agent (binder) for improving the property with which the fibers are bundled, in order to improve its adhesiveness with the thermoplastic resin. In addition, it is preferable that the component of each of those surface treatment agents is being optimized according on the kind of the thermoplastic resin.

The composite sheet 7 described in the above-mentioned embodiment has the nonwoven fabric 6 laminated on the uppermost portion of the laminated reinforcing fibers 5, but the position at which the nonwoven fabric 6 is laminated with respect to the reinforcing fibers 5, the number of the nonwoven fabrics 6 to be laminated, or the like can be arbitrarily selected. For example, in the composite sheet production apparatus 10, the position at which a nonwoven fabric is laminated can be arbitrarily selected by providing the nonwoven fabric feeding unit 18 among or in front of the reinforcing fiber feeding units 14a to 14d. For example, a nonwoven fabric may be laminated between each layer of the reinforcing fibers. Alternatively, the reinforcing fibers supplied from the supplying portion 14d may be overlaid by a nonwoven fabric be fed together.

In addition, the thread to be used in the stitching can be selected from various types of thread. It is preferable that the stitching thread does not fuse during molding in order to control the orientation of the reinforcing fibers and to accurately maintain the orientation of the intermediate even after molding. In the molding step where the molds are heated to a temperature higher than the melting point of the thermoplastic resin constituting the fiber-reinforced thermoplastic composite material, it is preferable to utilize a thread that does not fuse. For example, an extremely thin glass yarn, an aramid fiber or PBO fiber having a high melting point can be suitably used.

On the other hand, in application where emphasis is placed on the external appearance of the molded article, thermoplastic resin thread that fuses may be used in the molding step where the molds are heated to a temperature higher than the melting point of the thermoplastic resin constituting the fiber-reinforced thermoplastic composite material. In this case, since the stitching thread fuses when the fiber-reinforced thermoplastic composite material is melted by heat, even though the orientation of the reinforcing fibers maybe slightly disrupted, the stitching thread is prevented from leaving a trace on the surface of the molded article.

Workability in placing the intermediate in the molds is improved by further stitching the composite sheets, which are formed into a predetermined shape to be placed in the molds, together in the step of producing the intermediate.

In addition, when a molded article is of such a shape that its thickness varies partially, the thickness of the intermediate may be partially increased depending on the shapes of the molds as shown in Fig. 4. In such case, since the thickness of part of the intermediate must be changed, and composite sheets of various shapes are to be laminated, the sheets formed into a predetermined shape to be placed in the molds maybe stitched together.

In addition, a molded article may warp when reinforcing fibers containing continuous reinforcing fibers are used as described above. In order to suppress the warping, the continuous reinforcing fibers may be provided such that the angels are symmetric in the thickness direction of an intermediate. For example, in the case where a composite sheet produced by sequentially feeding the reinforcing fibers at angles of 0°, - 45°, 90°, and 45°as shown in Fig. 2 is used, an intermediate may be produced by alternately laminating the composite sheet, which is produced by sequentially feeding the reinforcing fibers at angles of 45°, 90°, - 45°, and 0°. Thus, the directions of the continuous reinforcing fibers are symmetric in the thickness direction of the intermediate. Similarly, in the case of a composite sheet produced by sequentially feeding the reinforcing fibers at angles of - 45° and 45°, an intermediate may be produced by alternately laminating the composite sheet, which is produced by sequentially feeding the reinforcing fibers at angles of 45° and - 45°. Thus, the angles of the continuous reinforcing fibers are symmetric in the thickness direction of the intermediate. Therefore, the warping of the molded article can be suppressed by providing the continuous reinforcing fibers symmetric such that the directions are symmetric in the thickness direction of the intermediate.

Further, as described above, during the production of the intermediate, a composite sheet with angle of continuous reinforcing fibers being in symmetry in the thickness direction may be laminated alternatively such that the angles of the continuous reinforcing fibers are symmetric in the thickness direction. For example, a composite sheet with angle of continuous reinforcing fibers being in symmetry in the thickness direction may be produced by sequentially feeding the reinforcing fibers at angles of - 45°, 45°, 45°, and - 45°, and thereafter laminated. Since the composite sheet itself includes the continuous reinforcing fibers of which directions are symmetric in the thickness direction, and hence can suppress the warping of a molded article, the warping of the molded article can be suppressed by the producing the intermediate through the lamination of the composite sheet.

## Claims

1. A method for molding a fiber-reinforced thermoplastic composite material, comprising the steps of:
placing, in a mold, a composite sheet integrated by laminating and stitching together a reinforcing fiber and a nonwoven fabric composed of a thermoplastic resin; and
molding the composite sheet, which is being placed in the mold in the placing step, by pressing and heating the composite sheet such that a temperature of the composite sheet becomes higher than a melting point of the thermoplastic resin.

2. A composite sheet integrated by laminating and stitching together a reinforcing fiber and a nonwoven fabric composed of a thermoplastic resin.

3. A composite sheet, **characterized by** integrated by laminating reinforcing fibers such that the reinforcing fibers are arranged in a predetermined direction in each layer and the direction of the reinforcing fibers are different from layer to layer, and laminating and stitching a nonwoven fabric composed of a thermoplastic resin with the reinforcing fibers.

4. An intermediate for molding a fiber-reinforced thermoplastic composite material, **characterized by** cutting and/or laminating the composite sheet according to claim 2 or 3 to form a predetermined shape to be placed in a mold.

5. An intermediate for molding a fiber-reinforced thermoplastic composite material, **characterized by** cutting and laminating the composite sheets according to claim 2 or 3 to form a predetermined shape to be placed in a mold, and stitching the composite sheets together.
